# EUROPEAN PATENT APPLICATION

(11) **EP 4 773 150 A1**
(43) Date of publication of application: **08.07.2026**
(21) Application number: 24860480.3
(22) Date of filing: 30.08.2024
(51) Int. Cl.: G21F 9/30, G21F 5/12, G21F 5/002, G01T 1/02

(54) **LARGE CONCRETE CONTAINER CUTTING, DISMANTLING, AND DISPOSAL SUITABILITY EVALUATION SYSTEM AND METHOD**

(30) Priority: 01.09.2023 KR 20230116439
(71) Applicant: Korea Hydro & Nuclear Power Co., Ltd, Gyeongju-si, Gyeongsangbuk-do 38120 (KR)
(72) Inventor: HWANG, Young Hwan, Daejeon 34101 (KR); HWANG, Seok-Ju, Daejeon 34101 (KR); LEE, Mi-Hyun, Daejeon 34101 (KR); SON, Jung-Kwon, Daejeon 34101 (KR); KIM, Cheon-Woo, Daejeon 34101 (KR)
(74) Representative: Winter, Brandl - Partnerschaft mbB
(86) International application number: PCT/KR2024/013095
(87) International publication number: WO 2025/048564

(57) **Abstract**

A system for cutting and dismantling a large concrete container and evaluating disposal suitability according to an embodiment of the present invention includes a vertical and horizontal cutting apparatus for large concrete containers and solidified forms, capable of vertically and horizontally cut concrete containers and solidified forms, a cut block separating apparatus for separating a solidified form block, a grouting concrete block, an external container block from the cut blocks of the containers and the solidified forms cut by the vertical and horizontal cutting apparatus for containers and solidified forms, and a compliant disposal apparatus configured to determine clearance or disposal suitability with respect to the solidified form block, the grouting concrete block, and the external container block individually separated by the cut block separating apparatus, respectively, and execute clearance or disposal when clearance or disposal suitability requirements are satisfied.

## Description

### CROSS-REFERENCE TO RELATED APPLICATION

This application claims priority to and the benefit of Korean Patent Application No. 10-2023-0116439 filed with the Korean Intellectual Property Office on September 1, 2023, the entire contents of which are incorporated herein by reference.

### BACKGROUND OF THE INVENTION

### (a) Field of the Invention

The present invention relates to a system and method for cutting and dismantling a large concrete container and evaluating disposal suitability, and more particularly, the present disclosure relates to a system and method for cutting and dismantling a large concrete container and evaluating disposal suitability, capable of cutting a 200-liter drum-embedded waste in which high-dose concentrated waste liquid is cement-solidified, a grouting concrete, and an external concrete container, and effectively separate them through a radionuclide analysis process, and evaluating disposal suitability of each.

### (b) Description of the Related Art

In a radioactive waste storage facility, large concrete containers containing high-dose concentrated waste liquid are stored for long periods of time.

Inside the large concrete container, the concentrated waste liquid is cement-solidified in a 200-liter drum, and cement is grouted between the outer shell of the large concrete container and the 200-liter drum to form a large concrete wall with a thickness of 10 cm or more.

A large concrete container constructed in this manner is a composite structure, and the solidified form, which is the solidified form of the concentrated waste liquid solidified with cement in a 200-liter drum, may have a very high level of radioactive contamination, and while the large concrete wall and the outer shell of the large concrete container may have a minimal level of contamination that allows for clearance.

In order to dispose the solid waste and large concrete containers, the inventory of radionuclides in the embedded waste must be assessed and their characteristics must be evaluated, and in this case, unlike solid waste, the characteristics evaluation must be easily conducted to ensure the disposal suitability of grouted concrete walls and external concrete containers, which have a low contamination level.

However, the large concrete container is a complex structure that is very large and complex, and thus there is a lack of devices and processes for assessing the inventory of radionuclides and evaluating their characteristics.

In addition, in order to assess the radionuclide inventory and characterize the embedded waste, it is necessary to separate the embedded waste in 200-liter drums with cement-solidified high-dose concentrated waste liquid, the grouted concrete walls, and the external concrete containers, but this separation process has the problem of increasing the risk of radiation exposure to workers.

### SUMMARY OF THE INVENTION

### [Technical Problem]

The present invention has been provided to solve the above problem, and the object of the present invention is to provide a system and method for cutting and dismantling a large concrete container and evaluating disposal suitability, capable of automatically separate a 200-liter drum-embedded waste in which a high-dose concentrated waste liquid is cement-solidified, a grouting concrete wall, an external concrete container, and easily securing disposal suitability or clearance of the low-contamination grouting concrete wall and the external concrete container, and easily performing characteristics evaluation for secure disposal suitability of the embedded cement-solidified waste body.

### [Technical Solution]

A system for cutting and dismantling a large concrete container and evaluating disposal suitability according to an embodiment of the present invention includes a vertical and horizontal cutting apparatus for large concrete containers and solidified forms, capable of vertically and horizontally cut concrete containers and solidified forms, a cut block separating apparatus for separating a solidified form block, a grouting concrete block, an external container block from the cut blocks of the containers and the solidified forms cut by the vertical and horizontal cutting apparatus for containers and solidified forms, and a compliant disposal apparatus configured to determine clearance or disposal suitability with respect to the solidified form block, the grouting concrete block, and the external container block individually separated by the cut block separating apparatus, respectively, and execute clearance or disposal when clearance or disposal suitability requirements are satisfied.

A method for cutting and dismantling a large concrete container and evaluating disposal suitability according to another aspect of the present invention may include vertically or horizontally cutting and dismantling a composite structure body formed of a solidified form of a large concrete container containing a high-dose concentrated waste liquid, a concrete wall grouted between the solidified form and a container outer shell, and the container outer shell into concrete containers and solidified form blocks having a predetermined size by using a vertical and horizontal cutting apparatus, individually separating the solidified form block, a grouting concrete wall block, and a container outer shell block from the concrete containers and the solidified forms block cut and dismantled by the vertical and horizontal cutting apparatus, and evaluating disposal suitability with respect to the solidified form block and the grouting concrete wall block, respectively, which is then processed and disposed.

The method may further include separately performing surface dose rate measurement with respect to the separated solidified form block and the grouting concrete wall block, and separately performing a radionuclide analysis and radionuclide inventory evaluation with respect to the separated solidified form block and the grouting concrete wall block by applying a scale factor utilizing gamma rays, where the evaluating of the disposal suitability may include performing each evaluation based on each measurement resulting value obtained by the separately performing of the surface dose rate measurement and the performing of the radionuclide analysis and radionuclide inventory evaluation.

A cross-section of the large concrete container containing the high-dose concentrated waste liquid is rectangular or circular.

The individually separating of the solidified form block, the grouting concrete wall block, and the container outer shell block separates the solidified form block, the grouting concrete wall block, and the container outer shell block from the concrete container and the solidified form block by energy application or vibration and physical impact means through external vibration or a low or high frequency application.

### [Advantageous Effects]

According to a system and method for cutting and dismantling a large concrete container and evaluating disposal suitability according to an embodiment of the present invention, a 200-liter drum-embedded waste in which a high-dose concentrated waste liquid is cement-solidified, grouting concrete wall, external concrete container can be automatically separated, thereby achieving reduction of radiation exposure to workers during the separation process.

In addition, a system and method for cutting and dismantling a large concrete container and evaluating disposal suitability according to an embodiment of the present invention may effectively secure disposal suitability or facilitate implementation of clearance of the low-contamination grouting concrete and the external concrete container. The characteristics evaluation can be easily performed in order to secure disposal suitability of the embedded cement-solidified waste body.

### BRIEF DESCRIPTION OF THE DRAWINGS

FIG. 1 is a block diagram representing an internal configuration of a system for cutting and dismantling a large concrete container and evaluating disposal suitability according to an embodiment of the present invention.
FIG. 2 is a flowchart representing a method for cutting and dismantling a large concrete container and evaluating disposal suitability according to an embodiment of the present invention.
FIG. 3 and FIG. 4 are schematic views representing a large concrete container cut and dismantle method according to an embodiment of the present invention, respectively.

### DETAILED DESCRIPTION OF THE EMBODIMENTS

Hereinafter, the present disclosure will be described more fully with reference to the accompanying drawings, in which exemplary embodiments of the disclosure are shown. As those skilled in the art would realize, the described embodiments may be modified in various different ways, all without departing from the spirit or scope of the present disclosure.

In addition, unless explicitly stated to the contrary, the word "comprise," and variations such as "comprises" or "comprising," should be understood to imply the inclusion of stated elements but not the exclusion of any other elements.

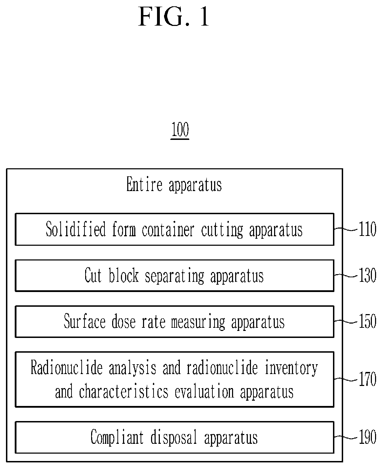

First, referring to FIG. 1, a system for cutting and dismantling a large concrete container and evaluating disposal suitability according to an embodiment of the present invention will be described in detail.

FIG. 1 is a block diagram representing an internal configuration of a system for cutting and dismantling a large concrete container and evaluating disposal suitability according to an embodiment of the present invention.

As shown in FIG. 1, a system for cutting and dismantling a large concrete container and evaluating disposal suitability 100 according to an embodiment of the present invention may include a vertical and horizontal cutting apparatus 110 for large concrete containers and solidified forms capable of vertically and horizontally cut large concrete containers and solidified forms, a cut block separating apparatus 130 for separating a solidified form block, a grouting concrete block, and an external container block from the cut blocks of the containers and the solidified forms cut by the vertical and horizontal cutting apparatus for containers and solidified forms 110, a surface dose rate measuring apparatus 150 configured to measure a surface dose rate with respect to the grouting concrete block and the external container block, separately, a radionuclide analysis and radionuclide inventory assessment apparatus 170 configured to analyze radionuclides with respect to the solidified form block, and evaluate an inventory for each of radionuclides, and a compliant disposal apparatus 190 configured to determine clearance or disposal suitability with respect to the solidified form block, the grouting concrete block, and the external container block, respectively, by using evaluation values of the surface dose rate measuring apparatus 150 and the radionuclide analysis and radionuclide inventory assessment apparatus 170, and execute clearance or disposal when clearance or disposal suitability requirements are satisfied.

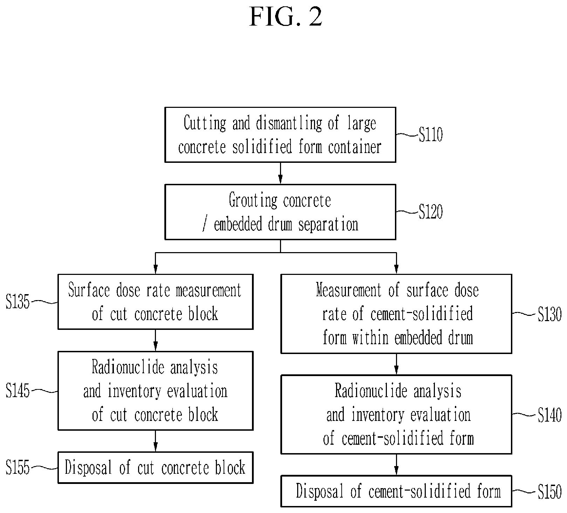

Hereinafter, referring to FIG. 2 to FIG. 4, a method for cutting and dismantling a large concrete container and evaluating disposal suitability according to an embodiment of the present invention will be described.

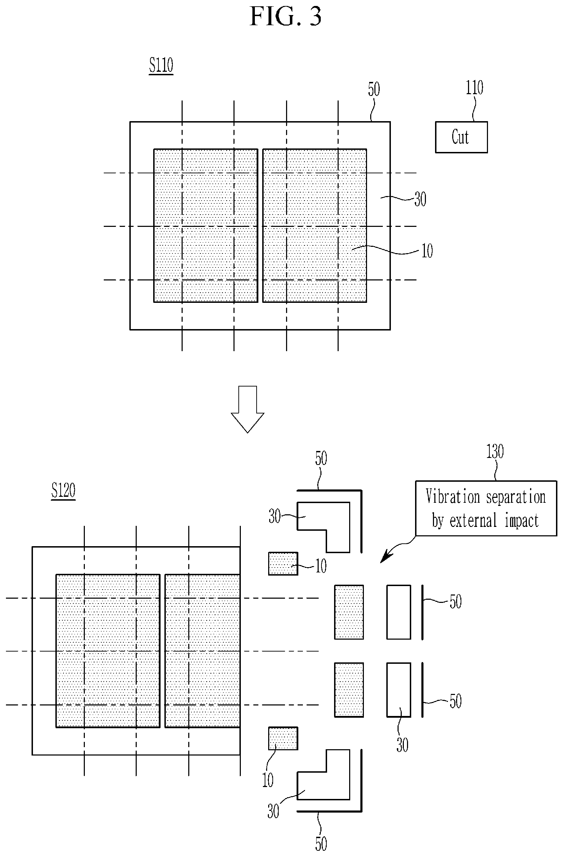

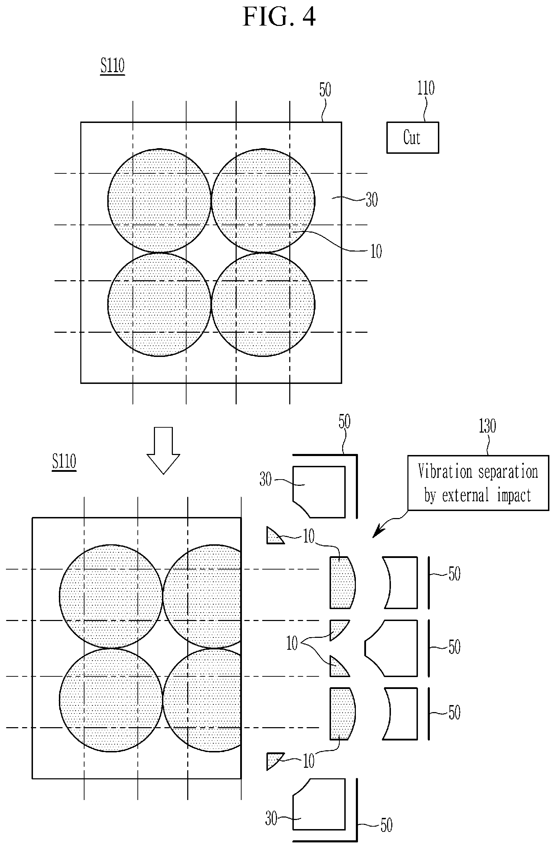

FIG. 2 is a flowchart representing a method for cutting and dismantling a large concrete container and evaluating disposal suitability according to an embodiment of the present invention. FIG. 3 and FIG. 4 are schematic views representing a large concrete container cut and dismantle method according to an embodiment of the present invention, respectively.

As shown in FIG. 2, a method for cutting and dismantling a large concrete container and evaluating disposal suitability according to an embodiment of the present invention may vertically or horizontally cut and dismantle a composite structure body formed of solidified form blocks 10, in which the concentrated waste liquid is cement-solidified and stored in the 200-liter drum, which is a large concrete container (C) containing a high-dose concentrated waste liquid, concrete wall blocks 30 grouted between the solidified form blocks 10 and external containers 50, and the external containers 50 into a plurality of concrete containers and solidified form blocks (CB) having a predetermined size by using the vertical and horizontal cutting apparatus 110, at step S110.

The solidified form blocks 10, the grouting concrete wall blocks 30, and the container outer shell blocks 50 cut and dismantled by the vertical and horizontal cutting apparatus 110 are separated individually, at step S120.

The individually separating of the solidified form block 10, the grouting concrete wall block 30, and the container outer shell block 50 cut and dismantled by the vertical and horizontal cutting apparatus 110 may separate the solidified form block 10, the grouting concrete wall block 30, and the container outer shell block 50 from the plurality of concrete containers and solidified form blocks (CB) by external vibration, and may be separated from the plurality of concrete containers and solidified form blocks (CB) by using energy application and vibration and physical impact means through applying a low or high frequency.

At step S130, the measurement of the surface dose rate is performed with respect to a cement-solidified form block 10 inside the embedded drum among the solidified form block 10, the grouting concrete wall block 30, and the container outer shell block 50 that are cut and dismantled by the vertical and horizontal cutting apparatus 110, and at step S135, the measurement of the separate surface dose rate is performed with respect to the grouting concrete wall block 30,.

At step S140, the radionuclide analysis and radionuclide inventory evaluation are performed with respect to the cement-solidified form block 10 inside the embedded drum among the solidified form block 10, the grouting concrete wall block 30, and the container outer shell block 50 that are cut and dismantled by the vertical and horizontal cutting apparatus 110 by applying a scale factor utilizing gamma rays.

In addition, with respect to the separated grouting concrete wall block 30 among the solidified form block 10, the grouting concrete wall block 30, and the container outer shell block 50 that are cut and dismantled by the vertical and horizontal cutting apparatus 110, a separate radionuclide analysis and radionuclide inventory evaluation is performed by applying the scale factor utilizing gamma rays, at step S145.

According to a method for cutting and dismantling a large concrete container and evaluating disposal suitability according to an embodiment of the present invention, the disposal suitability for each of the embedded waste and the grouted concrete wall of the rectangular or circular large concrete container that has been stored for a long period of time may be evaluated, and may be disposed accordingly, at step S150 and step S155.

As shown in FIG. 3, regarding the large concrete container (C) with a rectangular cross-section under the long-term storage, the solidified form block 10 of the 200-liter drum containing embedded the radioactive waste, the grouting concrete wall block 30 for fixing the drum, and the outer shell blocks 50 of rectangular containers are cut into composite blocks of a predetermined size, that is, concrete containers and solidified form blocks (CB), and then individually separated by vibration or external impact, and radionuclide analysis and radionuclide inventory and characteristics evaluation is performed for with respect to the solidified form block 10, the grouting concrete wall block 30, and the container outer shell block 50, thereby securing the process efficiency and disposal suitability.

In addition, as shown in FIG. 4, regarding the large concrete container (C) with a circular cross-section under the long-term storage, the solidified form blocks 10 of 200-liter drums containing the embedded radioactive waste, the grouting concrete wall blocks 30 for fixing the drum, and the outer shell blocks 50 of rectangular containers are cut into composite blocks of a predetermined size, that is, the concrete containers and the solidified form block (CB), and then individually separated by vibration or external impact, and radionuclide analysis and radionuclide inventory and characteristics evaluation is performed for with respect to the solidified form block 10, the grouting concrete wall block 30, and the container outer shell block 50, thereby securing the process efficiency and disposal suitability.

As such, the large concrete container containing the radioactive waste may be cut and dismantled by the vertical and horizontal cutting apparatus 110 as disclosed in FIG. 3 and FIG. 4, thereby being configured into a concrete containers and solidified body blocks (CB) that are easy to handle and manipulate.

In addition, the container outer shell blocks 50, the grouting concrete wall blocks 30, and the solidified forms 50 may be individually separated from the concrete container and solidified form block (CB), and the disposal suitability of a certain standard with respect to each of the container outer shell block 50, the grouting concrete wall block 30, and the solidified form 50 can be secured through the surface dose rate measurement, radionuclide analysis, and radionuclide inventory evaluation.

### [Industrial Applicability]

According to a system and method for cutting and dismantling a large concrete container and evaluating disposal suitability according to an embodiment of the present invention, a 200-liter drum-embedded waste in which a high-dose concentrated waste liquid is cement-solidified, grouting concrete wall, external concrete container can be automatically separated, thereby achieving reduction of radiation exposure to workers during the separation process.

In addition, a system and method for cutting and dismantling a large concrete container and evaluating disposal suitability according to an embodiment of the present invention may effectively secure disposal suitability or facilitate implementation of clearance of the low-contamination grouting concrete and the external concrete container. The characteristics evaluation can be easily performed in order to secure disposal suitability of the embedded cement-solidified waste body.

## Claims

1. A system for cutting and dismantling a large concrete container and evaluating disposal suitability, the system comprising:
a vertical and horizontal cutting apparatus for large concrete containers and solidified forms, capable of vertically and horizontally cut concrete containers and solidified forms;
a cut block separating apparatus for separating a solidified form block, a grouting concrete block, an external container block from the cut blocks of the containers and the solidified forms cut by the vertical and horizontal cutting apparatus for containers and solidified forms; and
a compliant disposal apparatus configured to determine clearance or disposal suitability with respect to the solidified form block, the grouting concrete block, and the external container block individually separated by the cut block separating apparatus, respectively, and execute clearance or disposal when clearance or disposal suitability requirements are satisfied.

2. The system of claim 1, further comprising:
a surface dose rate measuring apparatus configured to measure a surface dose rate with respect to the grouting concrete block and the external container block, separately; and
a radionuclide analysis and radionuclide inventory assessment apparatus configured to analyze radionuclides with respect to the solidified form block, and evaluate an inventory for each of radionuclides.

3. A method for cutting and dismantling a large concrete container and evaluating disposal suitability, comprising:
vertically or horizontally cutting and dismantling a composite structure body formed of a solidified form of a large concrete container containing a high-dose concentrated waste liquid, a concrete wall grouted between the solidified form and a container outer shell, and the container outer shell into concrete containers and solidified form blocks having a predetermined size by using a vertical and horizontal cutting apparatus;
individually separating the solidified form block, a grouting concrete wall block, and a container outer shell block from the concrete containers and the solidified forms block cut and dismantled by the vertical and horizontal cutting apparatus; and
evaluating disposal suitability with respect to the solidified form block and the grouting concrete wall block, respectively, which is then processed and disposed.

4. The method of claim 3, further comprising:
separately performing surface dose rate measurement with respect to the separated solidified form block and the grouting concrete wall block; and
separately performing a radionuclide analysis and radionuclide inventory evaluation with respect to the separated solidified form block and the grouting concrete wall block by applying a scale factor utilizing gamma rays,
wherein the evaluating of the disposal suitability comprises performing each evaluation based on each measurement resulting value obtained by the separately performing of the surface dose rate measurement and the performing of the radionuclide analysis and radionuclide inventory evaluation.

5. The method of claim 3, wherein a cross-section of the large concrete container containing the high-dose concentrated waste liquid is rectangular or circular.

6. The method of claim 3, wherein the individually separating of the solidified form block, the grouting concrete wall block, and the container outer shell block separates the solidified form block, the grouting concrete wall block, and the container outer shell block from the concrete container and the solidified form block by energy application or vibration and physical impact means through external vibration or a low or high frequency application.
